(19) Europäisches Patentamt
European Patent Office
Office européen des brevets

(11) EP 4 224 587 A1

(12) EUROPEAN PATENT APPLICATION
published in accordance with Art. 153(4) EPC

(43) Date of publication:
**09.08.2023 Bulletin 2023/32**

(21) Application number: **20961881.8**

(22) Date of filing: **18.11.2020**

(51) International Patent Classification (IPC):
***H01M 10/0525*** *(2010.01)* ***H01M 50/50*** *(2021.01)*

(52) Cooperative Patent Classification (CPC):
Y02E 60/10

(86) International application number:
**PCT/CN2020/129757**

(87) International publication number:
**WO 2022/104590 (27.05.2022 Gazette 2022/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
- **LIU, Jianyu
Ningde, Fujian 352100 (CN)**
- **LI, Wenqiang
Ningde, Fujian 352100 (CN)**
- **ZHENG, Jianming
Ningde, Fujian 352100 (CN)**
- **XU, Shuai
Ningde, Fujian 352100 (CN)**

(74) Representative: **Icosa
83 avenue Denfert-Rochereau
75014 Paris (FR)**

# (54) ELECTROCHEMICAL DEVICE AND ELECTRONIC DEVICE COMPRISING SAME

(57) This application relates to an electrochemical apparatus and an electronic apparatus containing the same. This application provides an electrochemical apparatus, where the electrochemical apparatus includes an electrode, where the electrode includes a current collector, an active material layer disposed on at least one surface of the current collector, a tab disposed on the current collector, and a tab protection layer disposed on the tab, where the tab protection layer includes a first polymer layer, the first polymer layer has a melting point of $T_A$°C, and $110 \leq T_A \leq 136.5$; and an electrolyte, where the electrolyte includes ethylene carbonate and propylene carbonate; based on a weight of the electrolyte, a sum of weight percentages of the ethylene carbonate and the propylene carbonate is Y%, and Y is 20-80; and Y and $T_A$ satisfy $0.147 < Y/T_A < 0.7$. The electrochemical apparatus of this application has improved hotbox performance and high-temperature storage performance.

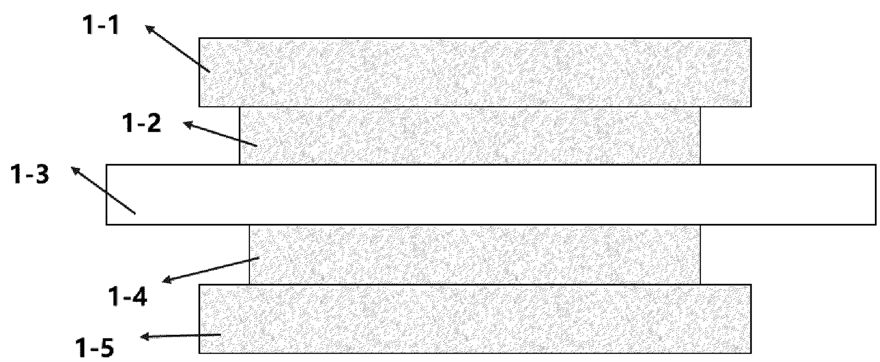


FIG. 1



Processed by Luminess, 75001 PARIS (FR)

## Description

### TECHNICAL FIELD

This application relates to the field of energy storage, specifically to an electrochemical apparatus and an electronic apparatus containing the same, and in particular to a lithium-ion battery.

### BACKGROUND

With the popularization and application of smart products, demands for mobile phones, notebook computers, cameras, and other electronic products have been growing year by year. As working power sources of electronic products, electrochemical apparatuses, for example, lithium-ion batteries, are gradually replacing traditional Ni-Cd and MH-Ni batteries due to such characteristics as high energy density, zero memory effect, and high working voltage. However, with the development of electronic products towards thinness and portability, requirements for lithium-ion batteries are constantly increasing. Development of safe lithium-ion batteries with good cycling stability, low impedance, and less self-discharge is one of the main demands of the market.

### SUMMARY

An embodiment of this application provides an electrochemical apparatus in an attempt to resolve at least one problem in the related field to at least some extent. An embodiment of this application further provides an electronic apparatus containing the electrochemical apparatus.

In one embodiment, this application provides an electrochemical apparatus, where the electrochemical apparatus includes an electrode and an electrolyte.

In an embodiment, the electrode includes a current collector, an active material layer disposed on at least one surface of the current collector, a tab disposed on the current collector, and a tab protection layer disposed on the tab. The tab protection layer includes a first polymer layer, the first polymer layer has a melting point of $T_A$°C, and $110 \leq T_A \leq 136.5$.

In an embodiment, the electrolyte includes ethylene carbonate and propylene carbonate, where based on a weight of the electrolyte, a sum of weight percentages of the ethylene carbonate and the propylene carbonate is Y%, and Y is 20-80; and Y and $T_A$ satisfy $0.147 < Y/T_A < 0.7$.

In some embodiments, the tab protection layer further includes a second polymer layer, the second polymer layer has a melting point of $T_B$°C, $T_B \leq 160$, and $T_A$ and $T_B$ satisfy $0 < T_B-T_A \leq 50$.

In some embodiments, the first polymer layer includes at least one of maleic anhydride-grafted modified polypropylene, acidified polyolefin resin, or polyethylene.

In some embodiments, the second polymer layer includes at least one of polypropylene or polypropylene modified resin.

In some embodiments, the electrolyte further includes propionate, and based on a weight of the electrolyte, a weight percentage of the propionate is 10%-60%.

In some embodiments, the propionate includes at least one of methyl propionate, ethyl propionate, propyl propionate, buty propionate, amyl propionate, fluorinated methyl propionate, fluorinated ethyl propionate, fluorinated propyl propionate, fluorinated butyl propionate, or fluorinated pentyl prorionate, where fluorinated means that at least one hydrogen atom is substituted by a fluorine atom.

In some embodiments, the electrolyte further includes a trimethylacetate compound.

In some embodiments, a structural formula of the trimethylacetate compound is as follows:

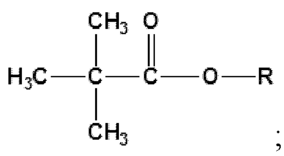

;

where R is $C_1$-$C_{10}$ alkyl, $C_2$-$C_{10}$ alkenyl, $C_1$-$C_{10}$ halogenated alkyl, $C_2$-$C_{10}$ halogenated alkenyl, halogen, aryl, or amide.

In some embodiments, the trimethylacetate compound includes at least one of methyl trimethylacetate or trimethylethyl acetate.

In some embodiments, the electrolyte further includes at least one of a dinitrile compound or a trinitrile compound, where the dinitrile compound includes at least one of the following compounds:

butanedinitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylbut, 2-methylglutaronitrile, 2,4-dimethylglutaronitrile, 2,2,4,4-tetramethylglutaronitrile, or ethylene glycol bis(propionitrile) ether; and
the trinitrile compound includes at least one of the following compounds:
1,3,5-pentanetricarbonitrile, 1,2,3-propanetricarbonitrile, 1,2,6-hexanetricarbonitrile, 1,3,6-hexanetricarbonitrile, 1,2,3-tris(2-cyanoethoxy)propane, 1,2,4-tris(2-cyanoethoxy)butane, or 1,2,5-tris(cyanoethoxy)pentane.

In another embodiment, this application provides an electronic apparatus, containing the electrochemical apparatus according to embodiments of this application.
The electrochemical apparatus provided in this application has improved hotbox performance and high-temperature storage performance.
Additional aspects and advantages of the embodiments of this application are partly described and presented in subsequent descriptions, or explained by implementation of the embodiments of this application.

## BRIEF DESCRIPTION OF DRAWINGS

To describe embodiments of this application, the following briefly describes the accompanying drawings required for describing the embodiments of this application or the prior art. Apparently, the accompanying drawings described below are merely some embodiments of this application. A person skilled in the art may still derive drawings for other embodiments from structures shown in these accompanying drawings without creative efforts.

FIG. 1 shows a package structure of a tab and a packaging bag according to one embodiment of this application.
FIG. 2 shows a structure of a tab protection layer according to one embodiment of this application.
FIG. 3 shows a structure of a tab protection layer according to another embodiment of this application.
FIG. 4 shows a battery structure and a location of a tab protection layer according to one embodiment of this application.

## DESCRIPTION OF EMBODIMENTS

Embodiments of this application are described in detail below. The embodiments of this application should not be construed as limitations on the application.
In addition, quantities, ratios, and other values are sometimes presented in the format of ranges in this specification. It should be understood that such range formats are used for convenience and simplicity and should be flexibly understood as including not only values clearly designated as falling within the range but also all individual values or sub-ranges covered by the range as if each value and sub-range are clearly designated.
In specific embodiments and claims, a list of items connected by the terms "one of", "one piece of", "one kind of" or other similar terms may mean any one of the listed items. For example, if items A and B are listed, the phrase "one of A and B" means only A or only B. In another example, if items A, B, and C are listed, the phrase "one of A, B, and C" means only A, only B, or only C. The item A may contain a single element or a plurality of elements. The item B may contain a single element or a plurality of elements. The item C may contain a single element or a plurality of elements.
In the specific embodiments and claims, an item list connected by the terms "at least one of", "at least one piece of", "at least one kind of" or other similar terms may mean any combination of the listed items. For example, if items A and B are listed, the phrase "at least one of A and B" means only A; only B; or A and B. In another example, if items A, B, and C are listed, the phrase "at least one of A, B, and C" means only A; only B; only C; A and B (exclusive of C); A and C (exclusive of B); B and C (exclusive of A); or all of A, B, and C. The item A may contain a single element or a plurality of elements. The item B may contain a single element or a plurality of elements. The item C may contain a single element or a plurality of elements.
As used herein, the term "alkyl" is intended to be a straight-chain saturated hydrocarbon structure having 1 to 20 carbon atoms. The term "alkyl" is also intended to be a branched or cyclic hydrocarbon structure having 3 to 20 carbon atoms. For example, the alkyl may be an alkyl having 1 to 20 carbon atoms, an alkyl having 1 to 10 carbon atoms, an alkyl having 1 to 5 carbon atoms, an alkyl having 5 to 20 carbon atoms, an alkyl having 5 to 15 carbon atoms, or an alkyl having 5 to 10 carbon atoms. References to an alkyl with a specific carbon number are intended to cover all geometric isomers with the specific carbon number. Therefore, for example, "butyl" is meant to include n-butyl, sec-butyl, isobutyl, tert-butyl, and cyclobutyl; and "propyl" includes n-propyl, isopropyl, and cyclopropyl. Examples of the alkyl include, but are not limited to, methyl, ethyl, n-propyl, isopropyl, cyclopropyl, n-butyl, isobutyl, sec-butyl, tert-butyl, cyclobutyl, n-pentyl, isopentyl, neopentyl, cyclopentyl, methylcyclopentyl, ethylcyclopentyl, n-hexyl, isohexyl, cyclohexyl, n-heptyl, octyl, cyclopropyl, cyclobutyl, and norbornyl. In addition, the alkyl may be arbitrarily substituted.
As used herein, the term "alkenyl" refers to a straight-chain or branched monovalent unsaturated hydrocarbon

group having at least one and usually 1, 2, or 3 carbon-carbon double bonds. Unless otherwise defined, the alkenyl generally contains 2 to 20 carbon atoms. For example, the alkenyl may be an alkenyl having 2 to 20 carbon atoms, an alkenyl having 6 to 20 carbon atoms, an alkenyl having 2 to 12 carbon atoms, or an alkenyl having 2 to 6 carbon atoms. Representative alkenyls include, for example, vinyl, n-propenyl, isopropenyl, n-but-2-enyl, but-3-enyl, and n-hex-3-enyl. In addition, the alkenyl may be arbitrarily substituted.

The term "aryl" covers both monocyclic and polycyclic systems. A polycyclic ring may have two or more rings in which two carbons are shared by two adjacent rings (the rings are "fused"), where at least one of the rings is aromatic, and other rings, for example, may be cycloalkyl, cycloalkenyl, aryl, heterocyclyl and/or heteroaryl. For example, the aryl may be $C_6$ to $C_{50}$ aryls, $C_6$ to $C_{40}$ aryls, $C_6$ to $C_{30}$ aryls, $C_6$ to $C_{20}$ aryls, or $C_6$ to $C_{10}$ aryls. Representative aryls include, for example, phenyl, methylphenyl, propylphenyl, isopropylphenyl, benzyl, naphth-1-yl, and naphth-2-yl. In addition, the aryl may be arbitrarily substituted.

As used herein, the term "halogenated alkyl" refers to an alkyl that has at least one hydrogen atom being substituted by a halogen atom. The term "halogenated alkenyl" refers to an alkenyl that has at least one hydrogen atom being substituted by a halogen atom.

As used herein, the term "halogen" covers F, Cl, Br, and I.

In the case of substitution, a substituent can be independently selected from a group including the following: halogen, alkyl, alkenyl, and aryl.

As used herein, the content of each component is obtained based on the weight of the electrolyte.

As used herein, the term "substitute" or "substituted" refers to being substituted by one or more (for example, 2 or 3) substituents. As used herein, "fluorinated" refers to being substituted by one or more (for example, 2 or 3) Fs.

### I. Electrochemical apparatus

In some embodiments, this application provides an electrochemical apparatus, where the electrochemical apparatus includes an electrode and an electrolyte.

In some embodiments, the electrode includes a current collector, an active material layer disposed on at least one surface of the current collector, a tab disposed on the current collector, and a tab protection layer disposed on the tab, where the tab protection layer includes a first polymer layer, the first polymer layer has a melting point of $T_A$°C, and $110 \leq T_A \leq 136.5$

In some embodiments, the electrolyte includes ethylene carbonate and propylene carbonate, where based on a weight of the electrolyte, a sum of weight percentages of the ethylene carbonate and the propylene carbonate is Y%, and Y is 20-80; and Y and $T_A$ satisfy $0.147 < Y/T_A < 0.7$. $Y/T_A$ within this range increases thermal stability of an electrochemical system of the electrochemical apparatus, thereby improving hotbox performance and significantly improving high-temperature storage performance of lithium-ion batteries.

In some embodiments, $T_A$ is 110, 115, 120, 125, 130, 135, 136, or 136.5, or in a range of any two of these values. $T_A$ within such ranges can significantly improve safety performance of the electrochemical device.

In some embodiments, Y is 20, 25, 30, 35, 40, 45, 50, 55, 60, 70, or 80, or in a range of any two of these values.

In some embodiments, a value of $Y/T_A$ is 0.1, 0.2, 0.3, 0.4, 0.5, 0.6, 0.65, or 0.7, or in a range of any two of these values.

In some embodiments, the tab protection layer further includes a second polymer layer, the second polymer layer has a melting point of $T_B$°C, $T_B \leq 160$, and $T_A$ and $T_B$ satisfy $0 < T_B\text{-}T_A \leq 60$. $T_B\text{-}T_A$ within this range allows the electrochemical device to have better safety performance.

In some embodiments, $T_B$ is 138, 140, 145, 150, 155, or 160, or in a range of any two of these values.

In some embodiments, a value of $T_B\text{-}T_A$ is 0.1, 0.5, 1, 3, 5, 10, 20, 30, 40, or 50, or in a range of any two of these values.

In some embodiments, the first polymer layer includes at least one of maleic anhydride-grafted modified polypropylene, acidified polyolefin resin, or polyethylene.

In some embodiments, the first polymer layer includes at least one of QE840 and QFF551 of Mitsui Chemicals, Dupont Nucrel 0910, Dupont Elvax, Samsung E093A, or Mitsubishi Chemical P546.

In some embodiments, the second polymer layer includes at least one of polypropylene resins.

In some embodiments, the second polymer layer includes at least one of Samsung CF330, TPC FS5611, or Exxon Mobil 6102FL.

In some embodiments, the tab protection layer is a single-layer, double-layer, or three-layer structure.

In some embodiments, the tab protection layer consists of one first polymer layer. In some embodiments, the tab protection layer consists of one first polymer layer and one second polymer layer. In some embodiments, the tab protection layer consists of two first polymer layers and one second polymer layer disposed between the two first polymer layers.

In some embodiments, the electrolyte further includes propionate, and based on a weight of the electrolyte, a

weight percentage of the propionate is 10%-60%. In some embodiments, based on a weight of the electrolyte, a weight percentage of the propionate is 10%, 20%, 30%, 40%, 50%, or 60%, or in a range of any two of these values.

In some embodiments, the propionate includes at least one of methyl propionate, ethyl propionate, propyl propionate, buty propionate, amyl propionate, fluorinated methyl propionate, fluorinated ethyl propionate, fluorinated propyl propionate, fluorinated butyl propionate, or fluorinated pentyl prorionate, where fluorinated means that at least one hydrogen atom is substituted by a fluorine atom.

In some embodiments, the electrolyte further includes a trimethylacetate compound.

In some embodiments, a structural formula of the trimethylacetate compound is as follows:

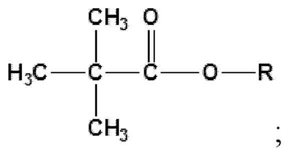;

where R is $C_1$-$C_{10}$ alkyl, $C_2$-$C_{10}$ alkenyl, $C_1$-$C_{10}$ halogenated alkyl, $C_2$-$C_{10}$ halogenated alkenyl, halogen, aryl, or amide.

In some embodiments, R is $C_1$-$C_6$ alkyl, $C_2$-$C_6$ alkenyl, $C_1$-$C_6$ halogenated alkyl, $C_2$-$C_6$ halogenated alkenyl, halogen, aryl, or amide.

In some embodiments, the trimethylacetate compound includes at least one of methyl trimethylacetate or trimethylethyl acetate.

In some embodiments, the electrolyte further includes at least one of a dinitrile compound or a trinitrile compound, where the dinitrile compound includes at least one of the following compounds:

butanedinitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylbut, 2-methylglutaronitrile, 2,4-dimethylglutaronitrile, 2,2,4,4-tetramethylglutaronitrile, or ethylene glycol bis(propionitrile) ether; and

the trinitrile compound includes at least one of the following compounds:

1,3,5-pentanetricarbonitrile, 1,2,3-propanetricarbonitrile, 1,2,6-hexanetricarbonitrile, 1,3,6-hexanetricarbonitrile, 1,2,3-tris(2-cyanoethoxy)propane, 1,2,4-tris(2-cyanoethoxy)butane, or 1,2,5-tris(cyanoethoxy)pentane.

In some embodiments, based on a weight of the electrolyte, a percentage of the dinitrile compound is 1%-5%. In some embodiments, based on a weight of the electrolyte, a percentage of the dinitrile compound is 1%, 2%, 3%, 3.5%, 4.0%, or 5.0%, or in a range of any two of these values.

In some embodiments, based on a weight of the electrolyte, a percentage of the trinitrile compound is 1%-5%. In some embodiments, based on a weight of the electrolyte, a percentage of the trinitrile compound is 1%, 2%, 3%, 3.5%, 4.0%, 5.0%, or 6.0%, or in a range of any two of these values.

In some embodiments, the electrolyte includes a trinitrile compound and an ethylene glycol bis(propionitrile) ether. Based a weight of the electrolyte, a weight percentage of the trinitrile compound is a%, a percentage of the ethylene glycol bis(propionitrile) ether is b%, and $1.0 \leq a+b \leq 6.0$. In some embodiments, a+b is 1.0, 2.0, 3.0, 3.5, 4.0, 4.5, 5.0, 5.5, or 6.0, or in a range of any two of these values.

In some embodiments, $1.2 \leq a/b \leq 20$. In some embodiments, a/b is 2.0, 3.0, 3.3, 4.0, 5.5, 7.0, 8.5, 9.5, 12.0, 14.5, 16.5, 18.5, or 20.0, or in a range of any two of these values.

In some embodiments, the electrolyte further includes fluoroethylene carbonate and 1,3-propanesultone. Based on a weight of the electrolyte, a weight percentage of the fluoroethylene carbonate is c%, a weight percentage of the 1,3-propanesultone is d%, and $6.0 \leq c+d \leq 15.0$. In some embodiments, c+d is 6.0, 7.0, 8.0, 8.5, 9.0, 9.5, 10.0, 11.0, 11.5, 12.0, 13.0, 14.0, or 15.0, or in a range of any two of these values.

In some embodiments, $1.2 \leq c/d \leq 20$. In some embodiments, c/d is 1.2, 2.0, 3.0, 3.3, 4.0, 5.5, 7.0, 8.5, 9.5, 12.0, 14.5, 16.5, 18.5, or 20.0, or in a range of any two of these values.

In some embodiments, the electrolyte may further include allyl cyanide.

In some embodiments, the electrochemical apparatus includes any apparatus in which electrochemical reactions occur.

In some embodiments, the electrode includes a negative electrode having a negative active substance capable of occluding and releasing metal ions, and a positive electrode having a positive electrode active substance capable of occluding and releasing metal ions.

In some embodiments, the electrochemical apparatus further includes a separator disposed between a positive electrode and a negative electrode.

In some embodiments, the electrochemical apparatus is a lithium secondary battery.

In some embodiments, the lithium secondary battery includes, but is not limited to: a lithium metal secondary

battery, a lithium-ion secondary battery, a lithium polymer secondary battery, a lithium-ion polymer secondary battery, or an all-solid-state lithium secondary battery.

FIG. 1 shows a package structure of a tab and a packaging bag according to one embodiment of this application. A packaging bag 1-1 is bonded with a metal belt 1-3 through a tab protection layer 1-2, and a packaging bag 1-5 is bonded with the metal belt 1-3 through a tab protection layer 1-4, where the tab protection layer 1-2 and the tab protection layer 1-4 are both a single-layer structure, in other words, consisting of one first polymer layer.

FIG. 2 shows a structure of a tab protection layer according to one embodiment of this application. The tab protection layer is a double-layer structure, where a tab protection layer disposed above a metal belt 2-3 consists of a first polymer layer 2-1 and a second polymer layer 2-2, and a tab protection layer disposed below the metal belt 2-3 consists of a first polymer layer 2-5 and a second polymer layer 2-4.

FIG. 3 shows a structure of a tab protection layer according to another embodiment of this application. The tab protection layer is a three-layer structure. A tab protection layer disposed above a metal belt 3-4 consists of first polymer layers 3-1 and 3-3 and a second polymer layer 3-2 disposed therebetween. A tab protection layer disposed below the metal belt 3-4 consists of first polymer layers 3-5 and 3-6 and a second polymer layer 3-6 disposed therebetween.

A main function of a tab protection layer is to bond to a tab of a lithium-ion battery, allowing the tab to be hot sealed with a polypropylene layer on an inner side of a packaging bag of a polymer battery. At present, generally, a commonly used tab protection layer has a melting point of above 140°C. In the present invention, a tab protection layer having a lower melting point is used to achieve a purpose of dissipating battery heat earlier and improving thermal safety of the battery.

## Negative electrode

The material, composition, and manufacturing method of the negative electrode used in the electrochemical apparatus of this application may include any technology disclosed in the prior art. In some embodiments, the negative electrode is a negative electrode described in the US patent application US9812739B, which is incorporated in this application by reference in its entirety.

In some embodiments, the negative electrode includes a current collector and a negative electrode active material layer disposed on the current collector. In some embodiments, the negative electrode active material layer includes a negative electrode active material. In some embodiments, the negative electrode active material includes, but is not limited to: a lithium metal, a structured lithium metal, natural graphite, artificial graphite, mesocarbon microbeads (MCMB), hard carbon, soft carbon, silicon, a silicon-carbon composite, a silicon-oxide material, a Li-Sn alloy, a Li-Sn-O alloy, Sn, SnO, $SnO_2$, spinel structure lithiated $TiO_2$-$Li_4Ti_5O_{12}$, and a Li-Al alloy, or any combination thereof.

In some embodiments, the negative electrode active material layer includes a binder. In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

In some embodiments, the negative electrode active material layer includes a conductive material. In some embodiments, the conductive material includes, but is not limited to: natural graphite, artificial graphite, carbon black, acetylene black, Ketjen black, carbon fiber, metal powder, metal fiber, copper, nickel, aluminum, silver or polyphenylene derivatives.

In some embodiments, the current collector includes, but is not limited to: a copper foil, a nickel foil, a stainless steel foil, a titanium foil, foamed nickel, foamed copper, or a polymer substrate coated with conductive metal.

In some embodiments, the negative electrode may be obtained by using the following method: mixing the active material, the conductive material and the binder in a solvent to prepare an active material composition, and applying the active material composition on the current collector.

In some embodiments, the solvent may include, but is not limited to: deionized water and N-methylpyrrolidone.

In some embodiments, the negative electrode in an all-solid-state secondary battery is a lithium metal foil.

## Positive electrode

A material, a structure, and a preparation method known in the art may be used to prepare a material for a positive electrode used in the electrochemical apparatus in this application. In some embodiments, the positive electrode in this application may be prepared by the technology described in the US patent application US9812739B, which is incorporated in this application by reference in its entirety.

In some embodiments, the positive electrode includes a current collector and a positive electrode active material layer disposed on the current collector. The positive electrode active material includes at least one lithiated intercalation compound that reversibly intercalates and deintercalates lithium ions. In some embodiments, the positive electrode

active material includes a composite oxide. In some embodiments, the composite oxide contains at least one element selected from cobalt, manganese, and nickel.

In some embodiments, the positive electrode active material is selected from lithium cobalt oxide ($LiCoO_2$), lithium-nickel-cobalt-manganese (NCM) ternary material, lithium iron phosphate ($LiFePO_4$), lithium manganate ($LiMn_2O_4$), or any combination thereof.

In some embodiments, the positive electrode active material may have a coating layer on its surface, or may be mixed with another compound having a coating layer. The coating layer may include at least one compound of a coating element selected from oxides of the coating element, hydroxides of the coating element, hydroxyl oxides of the coating element, oxycarbonates of the coating element, and hydroxy carbonates of the coating element. The compound used for the coating may be amorphous or crystalline.

In some embodiments, the coating element contained in the coating layer may include Mg, Al, Co, K, Na, Ca, Si, Ti, V, Sn, Ge, Ga, B, As, Zr, and F, or any combination thereof. The coating can be applied by using any method as long as the method does not adversely affect performance of the positive electrode active material. For example, the method may include any coating method known in the art, for example, spraying and dipping.

The positive electrode active material layer further includes a binder, and optionally includes a conductive material. The binder enhances binding between particles of the positive electrode active material, and binding between the positive electrode active material and the current collector.

In some embodiments, the binder includes, but is not limited to: polyvinyl alcohol, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, styrene-butadiene rubber, acrylic styrene-butadiene rubber, epoxy resin, or nylon.

In some embodiments, the conductive material includes, but is not limited to: carbon-based materials, metal-based materials, conductive polymer, and a mixture thereof. In some embodiments, the carbon-based material is selected from natural graphite, artificial graphite, carbon black, acetylene black, Ketjen black, carbon fiber, or any combination thereof. In some embodiments, the metal-based material is selected from metal powder, metal fiber, copper, nickel, aluminum, or silver. In some embodiments, the conductive polymer is a polyphenylene derivative.

In some embodiments, the current collector may be, but is not limited to, aluminum.

The positive electrode can be prepared by using a preparation method known in the art. For example, the positive electrode may be obtained by using the following method: mixing the active material, the conductive material, and the binder in a solvent to prepare an active material composition, and applying the active material composition on the current collector. In some embodiments, the solvent may include, but is not limited to, N-methylpyrrolidone and the like.

In some embodiments, the positive electrode is made by forming, on the current collector, a positive electrode material using a positive electrode active material layer including lithium transition metal-based compound powder and a binder.

In some embodiments, the positive electrode active material layer can usually be made by the following operations: dry mixing the positive electrode active material and the binder (a conductive material, a thickener, or the like as required) to form a sheet, pressing the obtained sheet to the positive electrode current collector, or dissolving or dispersing these materials in a liquid medium to form a slurry, which is applied on the positive electrode current collector as a coating and dried. In some embodiments, the material of the positive active substance layer includes any material known in the art.

**Separator**

In some embodiments, the electrochemical apparatus according to this application has a separator provided between a positive electrode and a negative electrode to prevent short circuits. The separator used in the electrochemical apparatus according to this application is not particularly limited to any material or shape, and may be based on any technology disclosed in the prior art. In some embodiments, the separator includes a polymer or an inorganic substance formed by a material stable to the electrolyte of this application.

For example, the separator may include a substrate layer and a surface treatment layer. The substrate layer is a non-woven fabric, a membrane, or a composite membrane having a porous structure, and a material of the substrate layer is selected from at least one of polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic layer, or may be a layer formed by a mixed polymer and an inorganic substance.

The inorganic layer includes inorganic particles and a binder. The inorganic particles are selected from one or more of aluminum oxide, silicon oxide, magnesium oxide, titanium oxide, hafnium oxide, tin oxide, ceria oxide, nickel

oxide, zinc oxide, calcium oxide, zirconium oxide, yttrium oxide, silicon carbide, boehmite, aluminum hydroxide, magnesium hydroxide, calcium hydroxide, and barium sulfate. The binder is selected from one or more of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, and polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

**Electrolytic salt**

The electrolytic salt used in the electrolyte of the embodiments of this application may be an electrolytic salt known in the art. The electrolytic salt includes, but is not limited to: inorganic lithium salts, such as $LiClO_4$, $LiAsF_6$, $LiPF_6$, $LiBF_4$, $LiSbF_6$, $LiSO_3F$, and $LiN(FSO_2)_2$; fluorine-containing organic lithium salts, such as $LiCF_3SO_3$, $LiN(FSO_2)(CF_3SO_2)$, $LiN(CF_3SO_2)_2$, $LiN(C_2F_5SO_2)_2$, cyclic 1,3-hexafluoropropane disulfonimide lithium, cyclic 1,2-tetrafluoroethane disulfonimide lithium, $LiN(CF_3SO_2)(C_4F_9SO_2)$, $LiC(CF_3SO_2)_3$, $LiPF_4(CF_3)_2$, $LiPF_4(C_2F_5)_2$, $LiPF_4(CF_3SO_2)_2$, $LiPF_4(C_2F_5SO_2)_2$, $LiBF_2(CF_3)_2$, $LiBF_2(C_2F_5)_2$, $LiBF_2(C_2F_2SO_2)_2$, and $LiBF_2(C_2F_5SO_2)_2$; and lithium salts containing dicarboxylic acid complex, such as bis(oxalato) lithium borate, difluorooxalato lithium borate, tris(oxalato) lithium phosphate, difluorobis (oxalato) lithium phosphate, and tetrafluoro(oxalato) lithium phosphatee. In addition, one of the foregoing electrolytic salts may be used alone, or two or more thereof may be used. For example, in some embodiments, the electrolytic salt includes a combination of $LiPF_6$ and $LiBF_4$. In some embodiments, the electrolytic salt includes a combination of inorganic lithium salts such as $LiPF_6$ or $LiBF_4$ and fluorine-containing organic lithium salts such as $LiCF_3SO_3$, $LiN(CF_3SO_2)_2$, or $LiN(C_2F_5SO_2)_2$. In some embodiments, a concentration of the electrolytic salt falls within a range of 0.8-3 mol/L, for example, a range of 0.8-2.5 mol/L, a range of 0.8-2 mol/L, a range of 1-2 mol/L, a range of 0.5-1.5 mol/L, a range of 0.8-1.3 mol/L, and a range of 0.5-1.2 mol/L, for another example, the concentration of the electrolytic salt is 1 mol/L, 1.15 mol/L, 1.2 mol/L, 1.5 mol/L, 2 mol/L, or 2.5 mol/L.

**II. Electronic apparatus**

The electronic apparatus in this application may be any apparatus using the electrochemical apparatus according to embodiments of this application.

In some embodiments, the electronic apparatus includes, but is not limited to: notebook computers, pen-input computers, mobile computers, e-book players, portable phones, portable fax machines, portable copiers, portable printers, head-mounted stereo headsets, video recorders, liquid crystal display televisions, portable cleaners, portable CD players, mini discs, transceivers, electronic notebooks, calculators, memory cards, portable recorders, radios, backup power supplies, motors, automobiles, motorcycles, assisted bicycles, bicycles, lighting apparatuses, toys, game machines, clocks, electric tools, flashlights, cameras, large household storage batteries, lithium-ion capacitors, or the like.

The following uses a lithium-ion battery as an example and describes preparation of a lithium-ion battery with reference to specific examples. A person skilled in the art understands that the preparation method described in this application is only an example, and that all other suitable preparation methods fall within the scope of this application.

**Example**

The following describes performance evaluation performed based on examples and comparative examples of the lithium-ion battery in this application.

Preparation of lithium-ion battery

(1) Preparation of electrolyte

In an argon atmosphere glove box with a water percentage < 10ppm, ethylene carbonate (EC), propylene carbonate (PC), and another organic solvent were mixed in a given proportion. The another organic solvent was selected from at least one of diethyl carbonate (DEC), ethyl propionate (EP), or propyl propionate (PP). Then $LiPF_6$ was added and stirred well to obtain a base electrolyte, where a concentration of $LiPF_6$ is 1.15 mol/L. Substances with different percentages, as shown in the tables below, were added into the base electrolyte, to obtain electrolytes in different examples and comparative examples. The percentages of substances in the electrolyte described in this application were calculated based on weights of the electrolytes.

Percentages of EC and PC are shown in Table 1, with DEC as the another organic solvent.

(2) Preparation of positive electrode

A positive electrode active material lithium cobalt oxide ($LiCoO_2$), a conductive agent carbon nanotubes (CNT), and a binder polyvinylidene fluoride were mixed at a weight ratio of 95:2:3. N-methylpyrrolidone (NMP) was added. Then the mixture was stirred well under the action of a vacuum mixer to obtain a positive electrode slurry which was then applied uniformly on a positive electrode current collector aluminum foil. The aluminum foil was dried at 85°C, followed by cold pressing, cutting, and slitting, and dried under vacuum at 85°C for 4 hours, to obtain a positive electrode.

(3) Preparation of negative electrode

A negative electrode active substance graphite, a binder styrene-butadiene rubber (SBR), and a thickener sodium carboxymethyl cellulose (CMC) at a weight ratio of 95:2:3 were fully stirred and mixed in an appropriate amount of deionized water solvent, to form a uniform negative electrode slurry; and the slurry was applied onto a negative electrode current collector Cu foil, followed by drying and cold pressing, to obtain a negative electrode.

(4) Preparation of separator

A polyethylene (PE) film was used as a separator.

(5) Preparation of lithium-ion battery

A tab protection layer and a metal belt were fitted together by flat-plate heating or high frequency heating to prepare a tab including a tab protection layer, then the resulting tab was fastened to a positive electrode and a negative electrode by welding. A positive electrode, a separator, and a negative electrode were stacked in order, so that the separator was located between the positive electrode and the negative electrode for isolation, followed by winding and being placed in an outer packaging foil; and the electrolyte prepared was injected into a dried battery, and after processes such as vacuum packaging, standing, formation, and shaping, the preparation of the lithium-ion battery is completed.

Test method

1. Hot-box test:

At 25°C, lithium-ion batteries were charged to 4.45 V at a constant current of 0.7C, then charged to 0.05C at a constant voltage of 4.45 V. The batteries were placed in a high temperature box, heated to 135°C at a temperature rise rate of 5±2°C/min, and kept for 1 hour (hr), and changes of battery voltage, battery temperature, and hotbox temperature were recorded. Batteries that did not catch fire or explode passed the test. Each group of 10 batteries was tested, and the number of batteries that passed the test was recorded.

2. High-temperature storage test

At 25°C, lithium-ion batteries were left standing for 30 minutes, constant-current charged to 4.45 V at 0.5C rate, then charged to 0.05C at a constant voltage of 4.45 V, and left standing for 5 minutes, and thicknesses of the lithium-ion batteries were measured and recorded as h0. Then, the lithium-ion batteries were placed in an 85°C thermostat and stored for 24 days, and thicknesses of the lithium-ion batteries were measured and recorded as h1. A thickness swelling rate of the lithium-ion battery was calculated by the following equation: thickness swelling rate (%) = (h1-h0)/h0 × 100%.

3. Low-temperature discharge test

At 25°C, lithium-ion batteries were charged to 4.45 V at a constant current of 0.7C, then charged to 0.05C at a constant voltage of 4.45 V. Then, the lithium-ion batteries were left standing for 4 hours at different temperatures (25°C, 0°C, -10°C), discharged to 3.0 V at 0.2C, and left standing for 5 minutes after the end of each discharge, and discharge capacities of the lithium-ion batteries were recorded. By taking the discharge capacity at 25°C as reference, discharge capacity ratios of the lithium-ion battery at different temperatures were obtained.

Discharge capacity ratio (%) of lithium-ion battery at different temperature = discharge capacity at different temperature (0°C or -10°C)/discharge capacity at 25°C × 100%

4. High-temperature storage test

At 25°C, lithium-ion batteries were left standing for 30 minutes, constant-current charged to 4.45 V at 0.5C rate, then charged to 0.05C at a constant voltage of 4.45 V, left standing for 5 minutes, and then store at 85°C for 24 days. Thicknesses of the batteries were tested, and a thickness swelling rate of the battery was calculated by the following equation:

thickness welling rate = [(thickness after storage – thickness before storage)/thickness before storage] x 100%.

A. Table 1 shows compositions and performance test results of lithium-ion batteries in related examples. In Comparative Examples D1-1 and D1-2, the used tab protection layer consists of a second polymer layer having a melting point of $T_B$. The second polymer layer is selected from Samsung CF330 block copolymer polypropylene. In Comparative Examples D1-3 to D1-5 and Examples S1-1 to S1-7, the used tab protection layer consists of one first polymer layer having a melting point of $T_A$. The first polymer layer is selected from BYNEL 50E632 (melting point of 136.5°C), BYNEL 50E631 (melting point of 136°C), BYNEL 40E529 (melting point of 135°C), BYNEL50E662 (melting point of 130°C), BYNEL 4104 (melting point of 125°C), BYNEL4208 (melting point of 110°C), and Nucrel 0910 (melting point of 100°C).

**Table 1**

| Number | Melting point $T_A$°C of first polymer layer | Melting point $T_B$°C of second polymer layer | EC+PC percentage Y (%) | $Y/T_A$ | Hotbox 130°C 1 hr | Hotbox 132°C 1 hr | Hotbox 135°C 1 hr | High-temperature storage thickness swelling rate at 85°C |
|---|---|---|---|---|---|---|---|---|
| D1-1 | — | 140°C | 15+15 | — | 8/10 pass | 2/10 pass | 0/10 pass | 20% |
| D1-2 | — | 140°C | 20+20 | — | 7/10 pass | 2/10 pass | 0/10 pass | 17% |
| D1-3 | 100°C | — | 0 | 0 | 3/10 pass | 2/10 pass | 0/10 pass | 21% |
| D1-4 | 100°C | — | 10+10 | 0.2 | 10/10 pass | 5/10 pass | 3/10 pass | 18% |
| D1-5 | 110°C | — | 50+30 | 0.72 | 2/10 pass | 2/10 pass | 0/10 pass | 18% |
| S1-1 | 110°C | — | 15+15 | 0.27 | 10/10 pass | 7/10 pass | 5/10 pass | 20% |
| S1-2 | 125°C | — | 15+15 | 0.24 | 10/10 pass | 8/10 pass | 4/10 pass | 20% |
| S1-3 | 135°C | — | 15+15 | 0.22 | 10/10 pass | 8/10 pass | 3/10 pass | 20% |
| S1-4 | 125°C | — | 20+20 | 0.32 | 10/10 pass | 9/10 pass | 6/10 pass | 15% |
| S1-5 | 125°C | — | 20+30 | 0.4 | 10/10 pass | 9/10 pass | 9/10 pass | 12% |
| S1-6 | 135°C | — | 20+30 | 0.37 | 10/10 pass | 9/10 pass | 7/10 pass | 16% |
| S1-7 | 130°C | — | 20+30 | 0.38 | 10/10 pass | 9/10 pass | 8/10 pass | 16% |
| S1-8 | 130°C | — | 30+30 | 0.46 | 9/10 pass | 9/10 pass | 9/10 pass | 15% |
| S1-9 | 130°C | — | 30+40 | 0.54 | 9/10 pass | 9/10 pass | 9/10 pass | 15% |
| S1-10 | 136.5°C | — | 10+10 | 0.15 | 9/10 pass | 8/10 pass | 9/10 pass | 16% |
| S1-11 | 136°C | — | 50+30 | 0.59 | 9/10 pass | 8/10 pass | 8/10 pass | 17% |

where "–" indicates absence of such layer.

It can be seen from the test results of Table 1 that lithium-ion batteries in Comparative Example D1-1 and Comparative Example D1-2 can only pass hotbox tests at 130°C, with very low pass rates of hotbox tests at 132°C and 135°C. This is because in Comparative Example D1-1 and Comparative Example D1-2, the tab protection layer has high melting points, gases cannot be flushed out of the air bag in a timely manner during an abuse test such as hotbox test, generated heat gradually accumulates inside the battery, which is very easy to cause the battery to catch fire and even explode. Either an adjustment on a total percentage of EC+PC or an adjustment on a melting point of a polymer layer may have an obvious improvement effect on hotbox test results. However, when a percentage of EC+PC is low, even the adjustment on the melting point does not achieve a good effect; and when a percentage of EC+PC is high, the adjustment on the melting point has a good effect on hotbox test results, but with bad electrical performance. Therefore, the two adjustments must be reasonable to achieve a good effect.

It can be seen from the test results of Examples S 1-1 to S 1-11 that, when the tab protection layer prepared

from the second polymer layer is replaced with the tab protection layer prepared from the first polymer layer, and a melting point value $T_A$ of the first polymer layer and a percentage Y of EC+PC satisfy 0.147 < $Y/T_A$ < 0.7, the pass rate of hotbox test for the lithium-ion batteries increases significantly. When the first polymer layer is used as the tab protection layer, gases inside the battery can be flushed out of the air bag in advance, allowing heat to dissipate in a timely manner. Therefore, hotbox test results are significantly improved. In addition, increased thermal stability of an entire electrochemical system improves hotbox performance and significantly improves high-temperature storage performance of the lithium-ion battery.

B. Table 2 and Table 3 show compositions and performance test results of lithium-ion batteries in related examples. In Example S2-1 to S2-3, the tab protection layer is of a double-layer structure, including one first polymer layer and one second polymer layer. The tab protection layer in Example S3-1 is of a three-layer structure. In other words, a second polymer layer is provided between two first polymer layers. A melting point value $T_A$ of all foregoing first polymer layers is 125°C. The foregoing first polymer layers are selected from BYNEL 4104 (125°C), and the second polymer layers are selected from Samsung CF330 block copolymer polypropylene.

**Table 2**

| Number | Melting point $T_A$°C of first polymer layer | Melting point $T_B$°C of second polymer layer | EC+PC percentage Y (%) | $Y/T_A$ | Hotbox 130°C 1 hr | Hotbox 132°C 1 hr | Hotbox 135°C 1 hr | High-temperature storage thickness swelling rate at 85°C |
|---|---|---|---|---|---|---|---|---|
| D1-2 | — | 140°C | 20+20 | — | 10/10 pass | 2/10 pass | 0/10 pass | 16% |
| S1-4 | 125°C | — | 20+20 | 0.32 | 10/10 pass | 9/10 pass | 6/10 pass | 15% |
| S2-1 | 125°C | 140°C | 20+20 | 0.32 | 10/10 pass | 10/10 pass | 7/10 pass | 14% |
| S2-2 | 125°C | 140°C | 25+25 | 0.4 | 10/10 pass | 10/10 pass | 10/10 pass | 11% |
| S2-3 | 125°C | 140°C | 20+25 | 0.36 | 10/10 pass | 10/10 pass | 10/10 pass | 12% |

where "–" indicates absence of such layer.

**Table 3**

| Number | Melting point $T_A$ of first polymer layer | Melting point $T_B$ of second polymer layer | EC+PC percentage Y (%) | $Y/T_A$ | Hotbox 130°C 1 hr | Hotbox 132°C 1 hr | Hotbox 135°C 1 hr | High-temperature storage thickness swelling rate at 85°C |
|---|---|---|---|---|---|---|---|---|
| S2-1 | 125°C | 140°C | 20+20 | 0.32 | 10/10 pass | 10/10 pass | 7/10 pass | 14% |
| S3-1 | 125°C | 140°C | 20+20 | 0.32 | 10/10 pass | 10/10 pass | 10/10 pass | 14% |

where "–" indicates absence of such layer.

It can be seen from the test results of Table 2 and Table 3 that when the tab protection layer prepared from the second polymer layer in Comparative Example D1-2 is replaced with the tab protection layer having a double-layer structure or the tab protection layer having a three-layer structure, hotbox test performance of the lithium-ion battery can also be improved. This is because that, either in a double-layer structure or a three-layer structure, heat can be dissipated from the battery in a timely manner at a relatively low temperature to avoid thermal runaway of the battery, provided that such structure includes a low melting point layer.

C. Table 4 shows compositions and performance test results of lithium-ion batteries in related examples. Example S4-1, Example S4-2, and Example S1-2 are similar in preparation of lithium-ion batteries except that compositions of electrolytes are different, with details shown in Table 4.

**Table 4**

| Number | Melting point $T_A$ of first polymer layer | EC+PC percentage Y (%) | $Y/T_A$ | Ethyl propionate (%) | Propyl propionate (%) | Hotbox 135°C 1 hr | Low-temperature discharge at -10°C |
|---|---|---|---|---|---|---|---|
| S1-2 | 125°C | 15+15 | 0.24 | 0 | 0 | 4/10 pass | 88% |
| S4-1 | 125°C | 15+15 | 0.24 | 0 | 60 | 8/10 pass | 90% |
| S4-2 | 125°C | 15+15 | 0.24 | 20 | 40 | 6/10 pass | 92% |

It can be seen from the test results of Table 4 that in a case that the melting point value $T_A$ of the first polymer layer and the percentage Y of EC+PC satisfy $0.147 < Y/T_A < 0.7$, addition of a given amount of at least one of propyl propionate or ethyl propionate in the electrolyte can further improve low-temperature performance of the lithium-ion battery.

D. Table 5 shows compositions and performance test results of lithium-ion batteries in related examples. Examples S5-1 to S5-3 and Example S1-2 are similar in preparation processes of lithium-ion batteries except that compositions of electrolytes are different, with details shown in Table 5.

## Table 5

| Number | Melting point $T_A$°C of first polymer layer | EC+PC percentage Y (%) | $Y/T_A$ | Trimethylethyl acetate (%) | Trimethylethyl acetate (%) | Hotbox 135°C 1 hr | Low-temperature discharge at -10°C |
|---|---|---|---|---|---|---|---|
| S1-2 | 125°C | 15+15 | 0.24 | 0 | 0 | 4/10 pass | 88% |
| S5-1 | 125°C | 15+15 | 0.24 | 0 | 20 | 7/10 pass | 88.7% |
| S5-2 | 125°C | 15+15 | 0.24 | 10 | 10 | 6/10 pass | 89% |
| S5-3 | 125°C | 15+15 | 0.24 | 20 | 0 | 6/10 pass | 89.5% |

It can be seen from the test results of Table 5 that in a case that the melting point value $T_A$ of the first polymer layer and the percentage Y of EC+PC satisfy $0.147 < Y/T_A < 0.7$, addition of a given amount of trimethylethyl acetate in the electrolyte can further improve hotbox performance of the lithium-ion battery.

E. Table 6 shows compositions and performance test results of lithium-ion batteries in related examples. Examples S6-1 to S6-16 and Example S1-2 are similar in preparation processes of lithium-ion batteries except that compositions of electrolytes are different, with details shown in Table 6.

## Table 6

| Number | Dinitrile compound | | 1,3,6-Hexanetricarbonitrile (%) | Hotbox 135°C 1 hr | Whether copper foil is corroded |
|---|---|---|---|---|---|
| | Type | Percentage (%) | | | |
| S1-2 | Adiponitrile | 0 | 0 | 4/10 pass | N/A |
| S6-1 | Adiponitrile | 2 | 0 | 5/10 pass | No |

| Number | Dinitrile compound | | 1,3,6-Hexanetricarbonitrile (%) | Hotbox 135°C 1 hr | Whether copper foil is corroded |
|---|---|---|---|---|---|
| | Type | Percentage (%) | | | |
| S6-2 | Adiponitrile | 1 | 1 | 6/10 pass | No |
| S6-3 | Adiponitrile | 1 | 2 | 7/10 pass | Yes |
| S6-4 | Adiponitrile | 3 | 2 | 8/10 pass | No |
| S6-5 | Butanedinitrile | 1.5 | 2 | 7/10 pass | Yes |
| S6-6 | Ethylene glycol bis(propionitrile) ether | 1 | 0 | 5/10 pass | No |
| S6-7 | Ethylene glycol bis(propionitrile) ether | 0.5 | 0.5 | 6/10 pass | No |
| S6-8 | Ethylene glycol bis(propionitrile) ether | 0.5 | 1.5 | 6/10 pass | Yes |
| S6-9 | Ethylene glycol bis(propionitrile) ether | 0.3 | 1 | 5/10 pass | Yes |
| S6-10 | Ethylene glycol bis(propionitrile) ether | 0.3 | 0.7 | 4/10 pass | Yes |
| S6-11 | Ethylene glycol bis(propionitrile) ether | 0.3 | 2 | 8/10 pass | Yes |
| S6-12 | Ethylene glycol bis(propionitrile) ether | 1.5 | 2 | 8/10 pass | Yes |
| S6-13 | Ethylene glycol bis(propionitrile) ether | 3 | 3 | 10/10 pass | Yes |
| S6-14 | Ethylene glycol bis(propionitrile) ether | 3.5 | 3 | 10/10 pass | No |
| S6-15 | Adiponitrile + ethylene glycolbis(propionitrile)ether | 2+0.3 | 2 | 8/10 pass | No |
| S6-16 | Butanedinitrile + ethylene glycolbis(propionitrile)ether | 2.5+0.3 | 2 | 9/10 pass | No |

It can be seen from the test results of Table 6 that in a case that the melting point value $T_A$ of the first polymer layer and the percentage Y of EC+PC satisfy $0.147 < Y/T_A < 0.7$, addition of given amounts of dinitrile compounds and trinitrile compounds in the electrolyte can further improve hotbox performance of the lithium-ion battery.

F. Table 7 shows compositions and performance test results of lithium-ion batteries in related examples. Examples S7-1 to S7-11 and Example S1-2 are similar in preparation processes of lithium-ion batteries except that compositions of electrolytes are different, with details shown in Table 7.

## Table 7

| Number | Fluoroethylene carbonate | 1,3-propanesultone | Dinitrile compound | | 1,3,6-hexanetricarbonitrile | Hotbox 135°C 1 hr | High-temperature storage thickness swelling rate at 85°C |
|---|---|---|---|---|---|---|---|
| | | | Type | Percentage (%) | | | |
| S1-2 | 0 | 0 | – | | – | 4/10 pass | 20% |
| S7-1 | 5 | 0 | – | | – | 1/10 pass | 30% |
| S7-2 | 0 | 3 | – | | – | 4/10 pass | 17% |
| S7-3 | 5 | 3 | – | | – | 6/10 pass | 25% |
| S7-4 | 3 | 3 | – | | – | 4/10 pass | 23% |
| S7-5 | 5.5 | 2 | – | | – | 5/10 pass | 26% |
| S7-6 | 6 | 3 | – | | – | 6/10 pass | 25% |
| S1-4 | 6 | 1 | – | | – | 5/10 pass | 27% |
| S7-7 | 4 | 3 | – | | – | 6/10 pass | 24% |
| S7-8 | 4.5 | 3 | Adiponitrile | 2 | – | 7/10 pass | 16% |
| S7-9 | 4.5 | 3 | Adiponitrile | 3 | 1 | 8/10 pass | 12% |
| S7-10 | 4.5 | 3 | Adiponitrile | 3 | 2 | 10/10 pass | 8% |
| S7-11 | 4.5 | 3 | Butanedinitrile | 3 | 2 | 10/10 pass | 9% |

where "–" indicates absence of such layer.

It can be seen from the test results of Table 7 that in a case that the melting point value $T_A$ of the first polymer layer and the percentage Y of EC+PC satisfy $0.147 < Y/T_A < 0.7$, addition of a given amount of fluoroethylene carbonate in the electrolyte degrades hotbox performance of lithium-ion batteries to some extent, but addition of 1,3-propanesultone in the electrolytes has no obvious effect on the hotbox performance of lithium-ion batteries. However, coexistence of fluoroethylene carbonate and 1,3-propanesultone can further improve hotbox performance of the lithium-ion batteries, which is supposed to be associated with joint film formation thereof. when fluoroethylene carbonate and 1,3-propanesultone coexist, addition of a dionitrile compound and a trinitrile compound can achieve an optimum effect.

References to "some embodiments", "some of the embodiments", "an embodiment", "another example", "examples", "specific examples", or "some examples" in this specification mean the inclusion of specific features, structures, materials, or characteristics described in at least one embodiment or example of this application in this embodiment or example. Therefore, descriptions in various places throughout this specification, such as "in some embodiments", "in the embodiments", "in an embodiment", "in another example", "in an example", "in a specific example", or "examples" do not necessarily refer to the same embodiment or example in this application. In addition, a specific feature, structure, material, or characteristic herein may be combined in any appropriate manner in one or more embodiments or examples.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

## Claims

1. An electrochemical apparatus, comprising:

   An electrode, wherein the electrode comprises a current collector, an active material layer disposed on at least one surface of the current collector, a tab disposed on the current collector, and a tab protection layer disposed on the tab, wherein the tab protection layer comprises a first polymer layer, the first polymer layer has a melting point of $T_A$°C, and $110 \leq T_A \leq 136.5$; and
   an electrolyte, wherein the electrolyte comprises ethylene carbonate and propylene carbonate;
   wherein based on a weight of the electrolyte, a sum of weight percentages of the ethylene carbonate and the propylene carbonate is Y%, and Y is 20-80; and
   Y and $T_A$ satisfy $0.147 < Y/T_A < 0.7$.

2. The electrochemical apparatus according to claim 1, wherein the tab protection layer further comprises a second polymer layer, the second polymer layer has a melting point of $T_B$°C, $T_B \leq 160$, and $T_A$ and $T_B$ satisfy $0 < T_B - T_A \leq 50$.

3. The electrochemical apparatus according to claim 1, wherein the first polymer layer comprises at least one of maleic anhydride-grafted modified polypropylene, acidified polyolefin resin, or polyethylene.

4. The electrochemical apparatus according to claim 2, wherein the second polymer layer comprises polypropylene resin.

5. The electrochemical apparatus according to claim 1, wherein the electrolyte further comprises propionate, and based on a weight of the electrolyte, a weight percentage of the propionate is 10%-60%.

6. The electrochemical apparatus according to claim 5, wherein the propionate comprises at least one of methyl propionate, ethyl propionate, propyl propionate, buty propionate, amyl propionate, fluorinated methyl propionate, fluorinated ethyl propionate, fluorinated propyl propionate, fluorinated butyl propionate, or fluorinated pentyl prorionate, wherein fluorinated means that at least one hydrogen atom is substituted by a fluorine atom.

7. The electrochemical apparatus according to claim 1, wherein the electrolyte further comprises a trimethylacetate compound.

8. The electrochemical apparatus according to claim 7, wherein a structural formula of the trimethylacetate compound is as follows:

   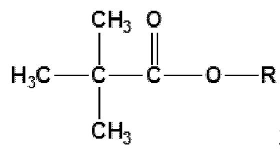
   ;

   wherein R is $C_1$-$C_{10}$ alkyl, $C_2$-$C_{10}$ alkenyl, $C_1$-$C_{10}$ halogenated alkyl, $C_2$-$C_{10}$ halogenated alkenyl, halogen, aryl, or amide.

9. The electrochemical apparatus according to claim 7, wherein the trimethylacetate compound comprises at least one of methyl trimethylacetate or trimethylethyl acetate.

10. The electrochemical apparatus according to claim 1, wherein the electrolyte further comprises at least one of a dinitrile compound or a trinitrile compound,
    wherein the dinitrile compound comprises at least one of the following compounds:

    butanedinitrile, glutaronitrile, adiponitrile, 1,5-dicyanopentane, 1,6-dicyanohexane, 1,7-dicyanoheptane, 1,8-dicyanooctane, 1,9-dicyanononane, 1,10-dicyanodecane, 1,12-dicyanododecane, tetramethylbut, 2-methylglutaronitrile, 2,4-dimethylglutaronitrile, 2,2,4,4-tetramethylglutaronitrile, or ethylene glycol bis(propionitrile) ether; and

the trinitrile compound comprises at least one of the following compounds:

1,3,5-pentanetricarbonitrile, 1,2,3-propanetricarbonitrile, 1,2,6-hexanetricarbonitrile, 1,3,6-hexanetricarbonitrile, 1,2,3-tris(2-cyanoethoxy)propane, 1,2,4-tris(2-cyanoethoxy)butane, or 1,2,5-tris(cyanoethoxy)pentane.

**11.** An electronic apparatus, wherein the electronic apparatus comprises the electrochemical apparatus according to any one of claims 1 to 10.

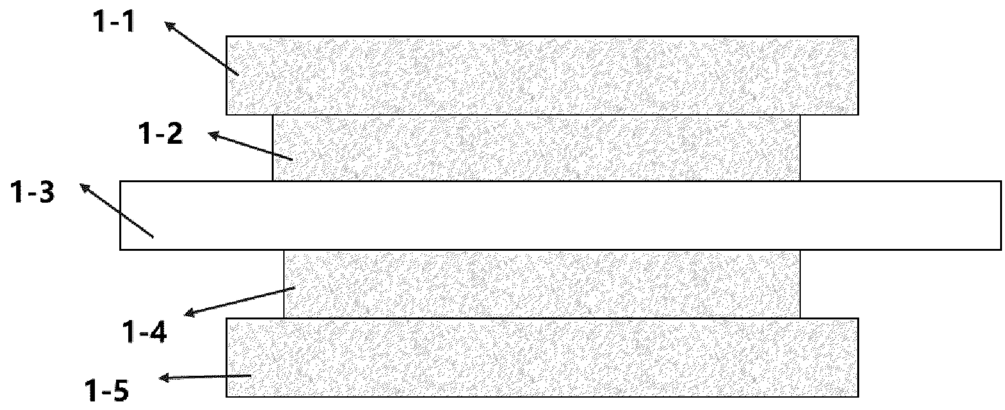


FIG. 1

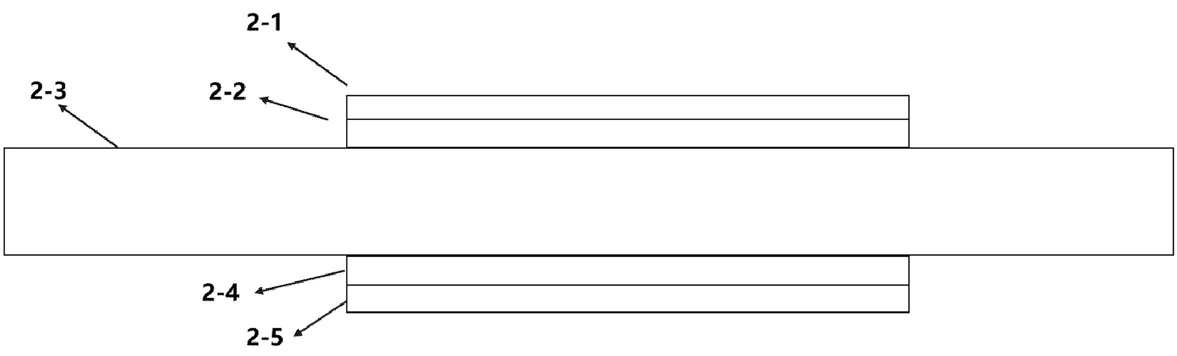


FIG. 2

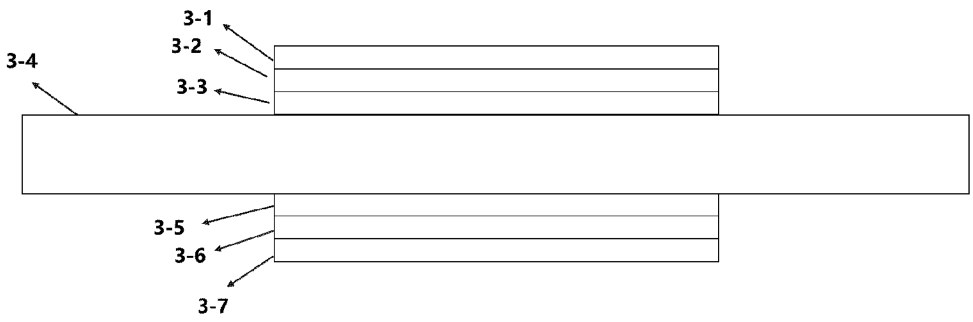


FIG. 3

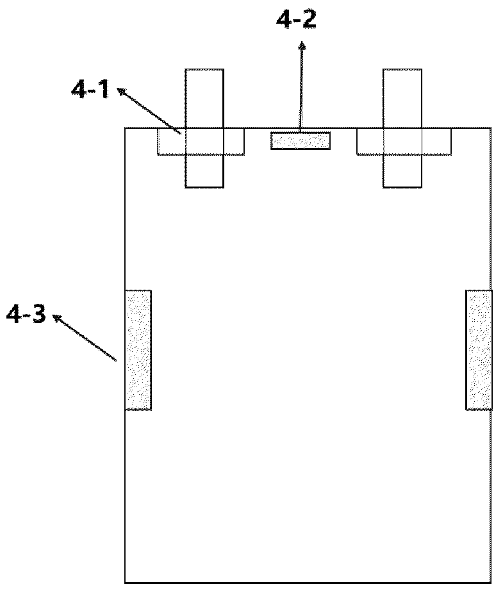


FIG. 4

**INTERNATIONAL SEARCH REPORT**

International application No.
**PCT/CN2020/129757**

**A. CLASSIFICATION OF SUBJECT MATTER**

H01M 10/0525(2010.01)i; H01M 50/50(2021.01)i

According to International Patent Classification (IPC) or to both national classification and IPC

**B. FIELDS SEARCHED**

Minimum documentation searched (classification system followed by classification symbols)

H01M 10/-,H01M 50/-

Documentation searched other than minimum documentation to the extent that such documents are included in the fields searched

Electronic data base consulted during the international search (name of data base and, where practicable, search terms used)

CNABS, CNKI, DWPI, SIPOABS: 电池, 极耳, 保护, 胶, 电解液, 熔点, 丙酸酯, 三甲基乙酸酯, 二腈, 三腈, battery, cell, protect+, lug? , tab? , adhesive, electrolyte, melting point? , propionate, tertiary carboxylic acid ester, dinitrile, trinitrile

**C. DOCUMENTS CONSIDERED TO BE RELEVANT**

| Category* | Citation of document, with indication, where appropriate, of the relevant passages | Relevant to claim No. |
|---|---|---|
| Y | CN 106784998 A (NINGDE AMPEREX TECHNOLOGY LTD.) 31 May 2017 (2017-05-31) description, paragraphs 58-174, and figures 1-9 | 1-11 |
| Y | CN 108039445 A (SHENZHEN OPTIMUM BATTERY CO. LTD.) 15 May 2018 (2018-05-15) description, paragraphs 4-21, figure 1 | 1-11 |
| Y | CN 111740147 A (NINGDE AMPEREX TECHNOLOGY LTD.) 02 October 2020 (2020-10-02) description, paragraphs 11-29 | 6,10,11 |
| Y | CN 101399377 A (SANYO ELECTRIC CO., LTD.) 01 April 2009 (2009-04-01) description, page 2 line 8 from the bottom - page 4 last line | 7-9,11 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **14 April 2021** | **17 August 2021** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.
**PCT/CN2020/129757**

| Patent document cited in search report | | | Publication date (day/month/year) | Patent family member(s) | | | Publication date (day/month/year) |
|---|---|---|---|---|---|---|---|
| CN | 106784998 | A | 31 May 2017 | None | | | |
| CN | 108039445 | A | 15 May 2018 | None | | | |
| CN | 111740147 | A | 02 October 2020 | None | | | |
| CN | 101399377 | A | 01 April 2009 | CN | 101399377 | B | 06 March 2013 |
| | | | | US | 2009087752 | A1 | 02 April 2009 |
| | | | | JP | 5235373 | B2 | 10 July 2013 |
| | | | | US | 7709156 | B2 | 04 May 2010 |
| | | | | JP | 2009087647 | A | 23 April 2009 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 9812739 B